(19) Europäisches Patentamt

European Patent Office

Office européen des brevets

(11) **EP 1 063 553 A1**

## (12) EUROPEAN PATENT APPLICATION
published in accordance with Art. 158(3) EPC

(43) Date of publication:
27.12.2000 Bulletin 2000/52

(21) Application number: 99906253.2

(22) Date of filing: 24.02.1999

(51) Int. Cl.[7]: **G02B 27/22**, H04N 13/00

(86) International application number:
**PCT/ES99/00047**

(87) International publication number:
**WO 99/44092 (02.09.1999 Gazette 1999/35)**

(84) Designated Contracting States:
AT BE CH CY DE DK ES FI FR GB GR IE IT LI LU
MC NL PT SE

(30) Priority: 25.02.1998 ES 9800403
11.06.1998 ES 9801233

(71) Applicant: Simon Serra, José M.
08006 Barcelona (ES)

(72) Inventor: Simon Serra, José M.
08006 Barcelona (ES)

(74) Representative:
Espiell Volart, Eduardo Maria et al
R. VOLART PONS Y CIA. S.L.
Pau Claris, 77, 2.o, 1.a
08010 Barcelona (ES)

## (54) CONJUNTO OPTICO-ELECTRONICO PARA EL VISIONADO TRIDIMENSIONAL Y EN RELIEVE DE IMAGENES REALES

(57) Two images captured, transmitted and received appropiately are treated through a series of polarized filters (4,7) and reflected against various mirrors (3,6) in order to make the images coincide in the frontal frame of vision of the assembly (2) so as to offer a tridimensional and relief perception without projecting images on any screen. One of the monitors-receivers (20) of a television or computer can be set on a horizontal plane and the other one in a mobile vertical position in front of and below the first one (22). The width of the screen of the monitors-receivers is equal to the difference of distance between both monitors, and the position of the frontal visual frame is at a distance which is double of said width.

FIG.7

FIG.5

EP 1 063 553 A1

**Description**

This patent of invention has for object a unit whose configuration is optical and electronic, specially designed to allow displaying tridimensional and relief images received by means of direct sending known systems such as the different types of cable or waves transmission as well as those from filming, video recording or otherwise, slides or photographic films. The system, with all its devices is also applicable to computer images and resolutions produced and displayed in computers. The essential characteristics of the unit object of this invention will be detailed in description below.

The performance of the unit referred to includes in every case the system for capturing above different types and images, total relief tridimensional images may be seen with the assistance of polarized ocular fittings, such as simple spectacles.

STATE OF THE ART

The state of the art known up to now provides devices having different characteristics which only allow to display images in three dimensions, but with a two-dimensional vision, without relief (present 3-D). This as for real images. The reproduction of virtual images by displaying them on the screens having a significant size is another of the embodiments provided by present state of the art however the drawback of the high facilities cost and the limitation to very concrete mass applications in large rooms specially fitted and special screens having huge sizes generally meeting other scopes of use and utilization.

The unit object of this invention has the main feature of its optical configuration in the fact that it has always available two fixed or moving images which are captured, transmitted, received, processed or modified according to the process disclosed below based on the use, namely of one or several polarized filters and real or virtual mirrors based on them.

The unit so devised does not require any mechanical or electrical synchronization device or mechanism because said synchronism is automatically provided.

The process eliminates the requirement of displaying on a current screen because vision paths are independent and have been designed so that it is not required to superpose images on a same plane or screen. With this design as well the optic angle as the distances of vision are completely elastic covering with similar accurateness a sufficient angular range.

It must also be stated that the unit may be used by eliminating one of the images or path to display real flat and without relief images, a use in which it will be obviously not required to dispose of ocular fittings.

Bearing in mind the current technical development of TV and photographic images their capture will be carried out as follows.

As for fixed photographic images they will be carried out by capturing two approximately parallel images obtained with a single camera and in quick succession or with two cameras laterally backed with a previously predetermined distance between lens. This process will be also used in the event of images on a slide support.

As for moving images, from cable or TV channel transmission as well as from recorded videotapes or other suitable support the process will be as follows:

The images will be live shots by means of two coupled cameras and transmitted via cable or waves, each to one vision receiver.

It may also occur that only one camera is used of the type allowing to capture two normal or compressed images of half the screen size.

To use images from a TV channel or the like, present state of the art will oblige in the event of using two cameras to have available two TV channels for simultaneously transmitting said two images from said parallel images.

The reception is performed by means of two monitors, in full or part of them, provided with their related screens, electronically modified or not in their interior and converted into a single equipment.

The distance from each spectator's eye to the image point corresponding to it is same at every moment although the spectator changes his vision, position therefore the accurateness and size of the fictitious superposition are total.

This is the reason why the plan view arrangements as well as the sizes of the elements composing the unit disclosed are one of the essential characteristics of the invention within their simplicity.

The several arrangements in plan view as well as the sized of the elements composing the unit will show no drawbacks in the moment of using said unit in the practice due to the room space it may occupy depending on which embodiments is applied.

This is the reason why the practical implementation of the unit is always carried out using a minimum room space and as variation of embodiment one of the monitors-receiver will be shown on an horizontal plane and the other, simplified, in upright position at the front and lower than the first. This positioning will allow a significant saving of room space while it facilitates the unit integration on the support because the second monitor may be placed perfectly and fully integrated on the support of the first which, in the end, will be the support for the whole assembly.

This variation of practical embodiment will necessarily imply to place virtual mirrors and filters and in a suitable amount as well as horizontally symmetrically inverting the upright monitor image which will be achieved by simply changing the internal wiring system thereof.

In another variation of practical embodiment, the lower upright monitor-receiver may be located above the horizontal monitor-receiver provided that the image horizontal inversion has been performed.

Still in another variation of practical embodiment may be to horizontally locate said lower monitor-receiver on same plane as the first monitor backed and at right angle to it and with its image horizontally inverted. This variation obviously will be more convenient when using computers.

In the event of receiving images captured by a single camera, the result of the vision achieved will be a part format on the monitor-receiver screen, concretely an upright half of said screen while if the image was captured with two parallel cameras, the vision obtained will be of full format.

An alternative arrangement in another practical embodiment of the invention is the use of a single monitor receiver and a single camera for capturing images, providing the spectator with a half screen format in normal case or full screen if suitable optic elements are applied.

The passage of images recorded by one single camera with final result of full screen will be achieved by using compression mirrors or lens when shooting and decompression when receiving, or internally acting on the camera and monitors receivers themselves to eliminate an excessive loss of the image horizontal accurateness there being necessary for it a careful lens and situation design in the event those are used.

Also, it will be possible without great problems to release digitalized images which will provide the required transmission amplitude to the present channels for the purpose of sending the double image.

It is to be pointed out, according to this description as object of the invention, its immediate application to the reception and display in relief of images from TV according to the present state of the art, and it is obvious that any technological improvement involving any component of the unit object of this invention will have a positive effect on said unit workability without impairing the spirit of the invention.

The unit is also applicable to computer-aided images and namely the fixed or moving perspectives which can be obtained with above media as well as motion picture cartoon or fixed picture which may all of them be displayed through the use of the unit disclosed in real and three-dimensional relief image. The suitable preparation of the computer programs will allow to create suitable programs and even to modify the already programmed as well fixed or moving drawings all of it even in real time.

The invention is also applicable to images received by direct connection such as those from control circuits, safety circuits, production lines, surgical operations, teaching, leisure, game playing apparatuses and the like.

In order that the image light quality the observer will perceive is the very best, the unit will be coated in its interior with a dark colour material although this part may be eliminated or simplified using a single polarization plane, while on a virtual mirror or mirror-filter, a much brighter image than the image to be directly perceived will be projected.

In the event of opaque photographs display, the lighting necessary will be achieved with suitable lamps located within the light-tight enclosures delimited by the photographs themselves and related filters.

In the event of transparencies, such as slides, the lighting will, be from the back by means of a suitable diffuse light.

It is obvious that it is convenient the whole opaque surface is not reflective and that the mirrors and crystals have no defects or dirtiness.

The distance to which the observer is located although not significant is a factor of variables having an incidence on the reception of the degree of relief he will perceive said observer may also by using a suitable control device vary the relative position of the images until obtaining the degree of relief wished with full accurateness this being valid at same time for every vision position.

The other control devices for lighting and even photograph or slide changing control devices in the case of fixed views will be those already existing and know.

All above disclosed with reference to monitors-receivers also includes computer screens, fixed images (photographs, slides, etc.) with inversion in the second screen or a second development in the event of fixed images.

Also and because of the present shape of the monitors, it can also be acted on the upright image inversion which would allow to place as variation of embodiment not shown in the drawings, the inverted shaped monitors-receivers saving more room in the horizontal deepness direction within the vision enclosure.

It must also be emphasized that the vision in relief may be converted in normal vision, also sharp, by simply keying in by hand or by remote control, the observer obviously discarding in this case the use of polarized spectacles.

The practical application of the optoelectronic configuration unit will allow the use in small places, allowing the immediate applications for leisure purpose as well as for working, for example within surgery, sport, motion picture fields, etc., as well for home purpose, which is the main aim of this invention, as for technical purpose, providing an equipment compact and cost effective in its embodiment and use, which can be additionally modified depending on the performances required.

In order to complete the disclosure of the optoelectronic unit object of this invention, the aim of which is three-dimensional and in relief display of real images, drawings are attached which as non limiting

examples illustrate a practical embodiment of said unit as well as other variations of embodiment.

In these drawings:

Fig. 1 is a schematic plan view of one of the positions of the optoelectronic unit object of this invention;

Fig. 2, complementary of the preceding one, also represents schematically and in plan view the arrangement of the two cameras which capture the images.

Fig. 3 represents schematically and in plan view the embodiment of the unit adapted to a single camera capturing the images.

Fig. 4 is an also schematically and in plan complementary view of the preceding one, of the arrangement of said single camera capturing the images with details of the configuration of said equipment and of the achievement of the double image to be transmitted;

Fig. 5 is a schematic view in perspective of the unit in its usual embodiment, that means with two camera capturing the images;

Fig. 6 is a schematic view in perspective of the unit in its embodiment with a single camera for capturing the images;

Fig. 7 is a schematic view in perspective of the unit in its embodiment as variation of Fig. 1 with the two receivers monitors together and at a 90° angle one of them under the other one;

Fig. 8 is a schematic side view of the unit showing the special arrangement of the two receivers monitors, one of them under the other.

Fig. 9 is a plan view corresponding to the preceding one of the unit.

Fig. 10 schematically illustrates a variation of the lower monitor-receiver positioning which is located above the first one.

Fig. 11 also schematically illustrates another variation of the lower monitor-receiver positioning, locating it on the side and on same plane as the first one.

Fig. 12 is a schematic view in perspective of an embodiment with a single camera for capturing the images, and

Fig. 13 is a schematic plan view corresponding to the preceding figure.

According to the different drawings, the optoelectronic unit for three-dimensional display and in relief of real images, object of this patent of invention, is constituted by an irregular prismatic body (1) having flat and parallel bottom (1a) and ceiling (1b), which remains laterally delimited by a rectangular upright and opaque wall (1c), which coincides at its front side with the frame of three-dimensional and in relief vision (2) and forming a right angle with each other. The opposite side is constituted by an upright wall (1d) located at 45° with respect to the vision frame (2) and coinciding with the edge of said frame, said wall (1b) bearing on its internal face a reflective mirror (3). On same edge of the frame (2) is arranged a crystal-filter (4) and thereafter the rectangular and opaque upright wall (1e) parallel to said wall (1c) of the other side.

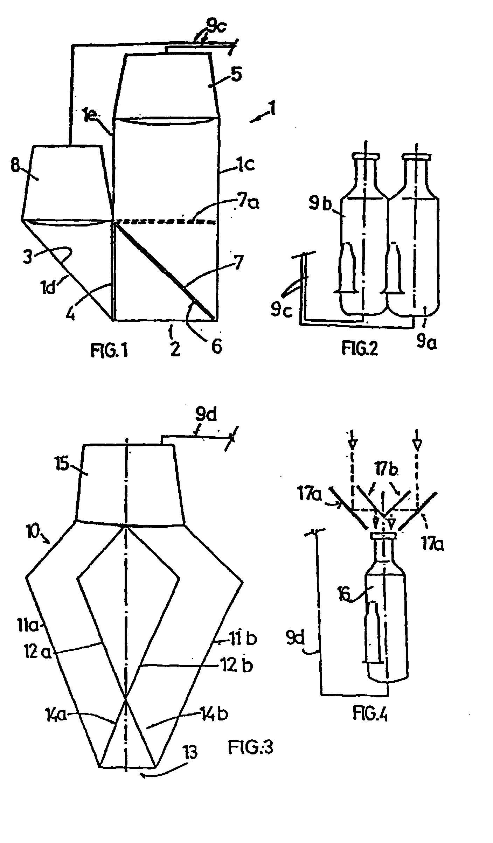

Both upright walls (1c) and (1e) frame at their internal ends the screen of the monitor-receiver (5). At their external ends said walls frame a crystal (6) and a filter (7) located at 45° with respect to both and of course parallel to the reflective mirror (3). The filter which accompanies said crystal can be alternatively backed on a second crystal (7a) (Fig. 1-5) remaining then in the position (7b) perpendicular all of it to the upright wall (1c) in order that unwanted reflections are avoided.

Last and framed by the front edge of the upright wall (1e) and the back edge of the wall at 45° there is the screen of the second monitor-receiver (8).

In a unit (1) external area, will be located the two cameras capturing the images (9a) and (9b), according to Fig. 2, provided with the suitable connections for transmitting images, in this case conducting cables (9c).

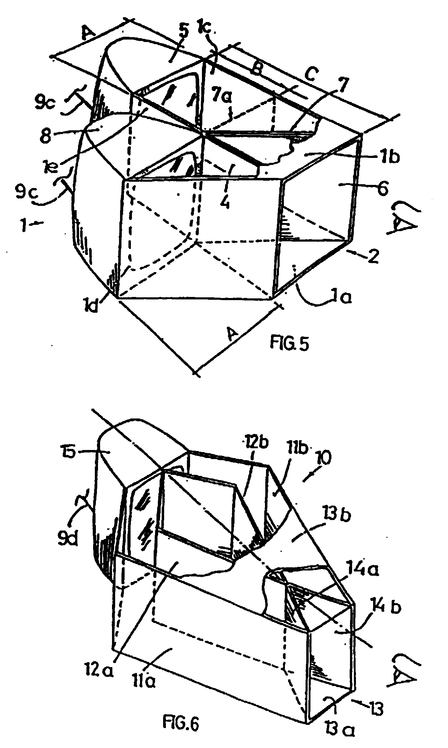

Size proportion of the unit is an essential characteristic of the invention as illustrated in Fig. 5, so that widths of the screen of both monitors-receivers (5) and (8) and having reference sign A, determine the distance between both monitors, reference B, being A=B while the position of the vision frame (2) on the front part of the unit (1) has the reference C, being C=2A or also C=A+B . With this size, the filter crystal (4) has a length equal to reference A, as it may easily be deducted.

In the variation of embodiment illustrated in figures 3, 4 and 6 the unit (10) can be seen formed by the external upright walls (11a) and (11b) and the internal walls (12a) and (12b) consisting both in a first area at 45° and a second area at about 30° constituting together two symmetrical ducts internally coated in their upright walls with flat reflective mirrors.

The front mouthpiece delimited in addition by the surface (13a) and cover (13b) is closed by the frame (13) on which the observer will, display the images in three dimensions and in relief, which remain located behind it and the crystal filters (14a) and (14b), located on respective ducts and provided with cross polarization, forming an angle of about 60°. The back mouthpiece on its side remains closed by the screen of the single monitor-receiver (15).

The arrangement of the single camera capturing the images (16) as shown in figure 4 allows that reflective mirrors (17a) and (17b) are located facing and symmetrical to each other which form the double flow of images towards the monitor-receiver (15). Here connection is also carried out by due cable (9d).

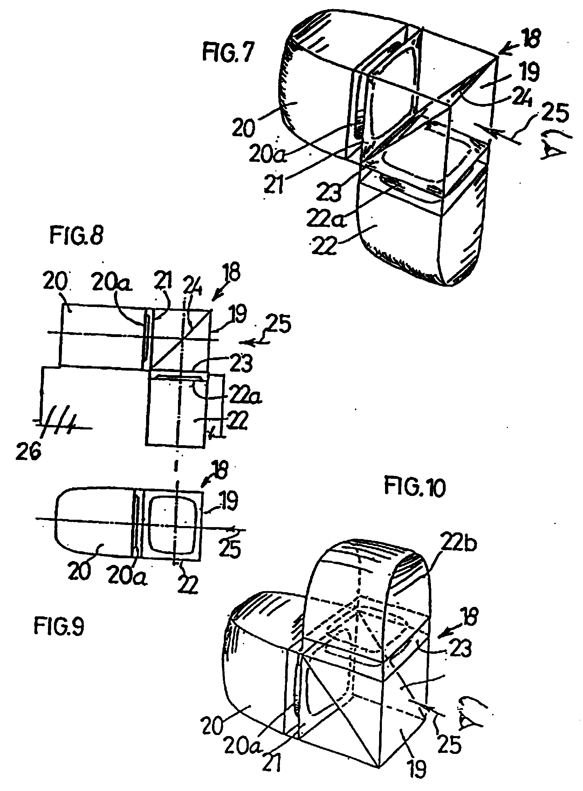

In the variation of the embodiment shown in figures 7, 8 and 9, the unit (18) is seen in the special arrangement of one of the two monitors receivers located under the other at a 90° angle.

The front face of the body (18) constitutes the three-dimensional and in relief vision frame (19) while the horizontal monitor receiver (20) remains located behind the back face the screen of which (20a) remains located just behind the upright filter (22) framed on said back face.

Under the lower face or body bottom (18) there is the upright monitor-receiver (22) located under the other monitor (20) the screen of which (22a) of inverted horizontal image remains just behind the horizontal filter (23), optional, framed on said bottom.

The crystal (24) is arranged between the two side faces of the body (18), inclined at 45° with its lower part close to the junction rib of both filters, the upright (21) and the optional horizontal (23) ones, a crystal which acts occasionally as virtual mirror.

The position of the observer is schematically represented by an eye in the figures and the arrow (25) indicates the direction of vision thereof.

As it can be checked therefore through the drawings and namely figure 7, the image from the screen (20a) is seen horizontally directly through the upright filter (21) preferably made of polarized paper while the image from the screen (22a) having passed through the horizontal filter (23) is reflected against the lower surface of the inclined crystal (24) being directed towards the vision frame (19). The inversion of the image previously promoted in the lower monitor-receiver (22) makes possible both images from the two monitors are coincident and synchronize, images which are seen horizontally, with a true feeling of relief.

The unit remains located on a suitable support (26) schematically drawn up in figure 8. The supporting drawing adaptable to the surrounding of the best fit shape will allow that the monitor (22) located at the lower part, remains virtually concealed occupying a small additional surface with subsequent practical advantages.

A variation of embodiment illustrated in figure 10 consists en locating the upright monitor-receiver (22b) above the horizontal monitor-receiver (20), that is to say, in a position inversely symmetrical to that shown in figures 7 and 8.

In this case, obviously the position of the body itself (18) together with the filters and internal inclined crystal (24) would also accompany the already mentioned symmetrical inversion.

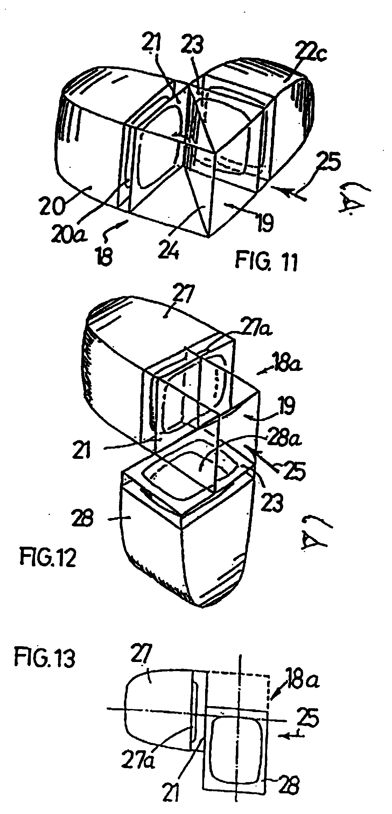

Another variation, still accompanied with the images internal inversion is the one illustrated in figure 11 in which the monitor-receiver (22a) remains horizontally located on same plane as the monitor-receiver (20), in a practical embodiment which will provide a solution to locating said monitor (22a) on a plane above or under the plane on which the monitor-receiver (20) is located and which actually will allow to place it in a recessed area close to it.

Another variation of embodiment is the one carried out with the reception of images captured by a single camera, the result achieved will be a part format display on the screens of the monitors-receivers (27) and (28). On one of them an half will be displayed while the other half will be displayed on the other,

In this embodiment, and as illustrated in figures 12 and 13, the prismatic body (18a) only covers with its back face the half of the screen (27a) of the horizontal monitor-receiver (27) while with its bottom or lower face it covers the other half of the screen (28a) of monitor (28) located under at the lower part. On the vision frame (19a) the specific images for this real feeling of relief in 3-D will be displayed, perfectly coordinated.

In this case of half screen the images may have been compressed previously when capturing them and expanded at reception through the suitable use of lens and mirrors or by means of electronic devices.

The object of the invention being sufficiently disclosed, it must be said that any variation of sizes, shapes and external decoration as well as class of material used in the practical embodiment of the unit disclosed shall not impair the spirit of the invention.

Shall not additionally impair the spirit of the invention namely the fact that the unit, is implemented with hinged planes conveniently joined so that it may be easily folded in order it takes no room in the moment of being moved or stored or when proceeding to a change of use.

The essential characteristics of the invention are summarized in following claims.

**Claims**

1. Optoelectronic unit for tridimensional display in relief of real images received in a TV monitor by means of direct sending systems as well as from filming, recording on any support , transparencies or opaque sheets which with the assistance of polarized ocular fittings such as total or part spectacles will be displayed in three dimensions and in relief essentially characterized in that its optical configuration is on the ground of , by means of the arrangement of two fixed or moving images suitably captured, transmitted and received and processed through a series of polarized filters, with polarization on two orthogonal planes or only one and by means of their reflection on different real or virtual mirrors, are coincident on the unit front vision frame providing the tridimensional and in relief perception without projection of images in any screen.

2. Optoelectronic unit for tridimensional display in relief of real images according to above claim characterized in that it is comprised of an irregular prismatic body formed by higher and lower horizontal, flat and parallel bottoms and on the sides by upright and opaque walls which form and delimit a straight duct from the rectangular front vision frame the single opening up to the screen of one of the TV or computer monitors receivers located at the back part and on its left side, another duct delimited by a reflective mirror at 45° and closed by the screen of the second of the monitors receivers, having available within it the first of said ducts, a polarized filter, close to a crystal located at 45° with reference to the front vision frame, and in the second, another polarized filter close to a crystal located between the edge of related monitor screen and the edge of the front vision frame, the first filter (the one having the crystal at 45°) may alternatively be backing a second crystal parallel to said frame behind mentioned position.

3. Optoelectronic unit for tridimensional display in relief of real images according to above claims characterized in that it is completed by the arrangement, in the case of receiving moving images, of TV or computer monitors-receivers located at the back of already disclosed ducts which in the case of real images reception in real time are conveniently connected with the two cameras capturing the images located outside the unit which could also be part of control and safety Systems or connected with wished TV channels for live images or with magnetoscopes or other suitable source, for recorded images, a connection carried out in the best fit way.

4. Optoelectronic unit for tridimensional display in relief of real images according to above claims essentially characterized by the unit dimensional proportion, the monitor-receiver screens width being equal to the difference of distance between both monitors and the front vision frame position at a distance twice said width.

5. Optoelectronic unit for tridimensional display in relief of real images characterized by the special arrangement of one of the TV or computer monitors-receivers on an horizontal plane and the other in moving upright position in front and under the first, perfectly integrated and movable in the unit supporting module, occupying a minimum space room, being provided with virtual mirrors and filters of the type and in suitable position and amount and having available the upright monitor-receiver image with symmetrical horizontal inversion, obtained by simple internal wiring.

6. Optoelectronic unit for tridimensional display in relief of real images according to above claim essentially characterized by the arrangement, as a variation of embodiment, of the upright monitor-receiver located above the horizontal monitor-receiver, with suitable arrangement of the virtual mirrors and filters as well as necessary image horizontal inversion, so that the volume occupied remains small at the area located above the horizontal monitor-receiver; and as another variation of embodiment, the arrangement of said upright monitor-receiver horizontally located and with its image horizontally inverted on same plane of the horizontal monitor.-receiver, located close to it so that the space occupied remains small on said horizontal plane.

7. Optoelectronic unit for tridimensional display in relief of real images according to above claims characterized in that in the arrangement for displaying fixed and opaque images, such as photographs, lighting will be directly achieved in the light tight enclosures delimited by the photographs themselves and the filters while in the arrangement for displaying transparencies, lighting will be behind them.

8. Optoelectronic unit for tridimensional display in relief of real images according to above claims characterized in that it shows the variation of embodiment with the use of a single camera for capturing images, in face of which are symmetrically arranged and facing each other reflective mirrors forming the image double flow towards the single monitor-receiver, the unit body being constituted by opaque upright panels which delimits a first area at 45° and a second area at about 30° , constituting two symmetrical ducts coated inside with flat reflective mirrors, being thereafter closed with the screen of the TV or computer monitor-receiver screen while the front mouthpiece is closed with a frame on which images will be displayed and after its filter crystals are at about 60° being also foreseen the possibility to digitalize the images in order to provide the necessary amplitude for transmission to the present channels in order to send the necessary double image.

9. Optoelectronic unit for tridimensional display in relief of real images characterized in that it shows the variation of embodiment using two monitors-receivers for TV or computer, placed in horizontal position the first and in upright position the second, located in the front and under or above the first, but sideways displaced so that the two part images are uprightly coincident after achieving the image symmetrical horizontal inversion in the upright monitor-receiver.

FIG.1

FIG.2

FIG.3

FIG.4

FIG. 5

FIG.6

FIG.7

FIG.8

FIG.10

FIG.9

FIG. 11

FIG.12

FIG.13

# INTERNATIONAL SEARCH REPORT

Internat .l Application No

PCT/ES 99/00047

**A. CLASSIFICATION OF SUBJECT MATTER**
IPC 6   G02B27/22   H04N13/00

According to International Patent Classification (IPC) or to both national classification and IPC

**B. FIELDS SEARCHED**

Minimum documentation searched (classification system followed by classification symbols)
IPC 6   G02B   H04N

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 83 02169 A (RACKHAM ANTHONY CHARLES) 23 June 1983 see abstract see page 5, line 14 - page 6, line 10 see page 8; figure 5 | 1-9 |
| X | US 4 743 964 A (SAUNIER CHRISTIAN ET AL) 10 May 1988 see column 2, line 56 - column 4, line 6; figure 1 | 1,3 |
| X | FR 1 473 232 A (M.PORTMANN ET AL.) 29 January 1966 see page 2, right-hand column, line 2 - line 42; figure 1 | 1,3 |

-/--

[X] Further documents are listed in the continuation of box C.    [X] Patent family members are listed in annex.

* Special categories of cited documents:

"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 May 1999 | 14.06.99 |

| Name and mailing address of the ISA | Authorized officer |
|---|---|
| European Patent Office, P.B. 5818 Patentlaan 2 NL - 2280 HV Rijswijk Tel. (+31-70) 340-2040, Tx. 31 651 epo nl, Fax: (+31-70) 340-3016 | Scheu, M |

Form PCT/ISA/210 (second sheet) (July 1992)

## INTERNATIONAL SEARCH REPORT

| | Internat al Application No |
|---|---|
| | PCT/ES 99/00047 |

**C.(Continuation) DOCUMENTS CONSIDERED TO BE RELEVANT**

| Category · | Citation of document. with indication.where appropriate. of the relevant passages | Relevant to claim No. |
|---|---|---|
| X | GB 2 150 311 A (MIDLANDS VIDEO SYSTEM LIMITED) 26 June 1985 <br> see abstract <br> ----- | 1 |

Form PCT/ISA/210 (continuation of second sheet) (July 1992)

EP 1 063 553 A1

## INTERNATIONAL SEARCH REPORT

Information on patent family members

| | | Internati. .i Application No |
|---|---|---|
| | | PCT/ES 99/00047 |

| Patent document cited in search report | | Publication date | Patent family member(s) | | Publication date |
|---|---|---|---|---|---|
| WO 8302169 | A | 23-06-1983 | EP | 0095492 A | 07-12-1983 |
| | | | JP | 58502068 T | 01-12-1983 |
| US 4743964 | A | 10-05-1988 | FR | 2569075 A | 14-02-1986 |
| | | | AT | 37974 T | 15-10-1988 |
| | | | DE | 3565622 A | 17-11-1988 |
| | | | EP | 0172110 A | 19-02-1986 |
| FR 1473232 | A | 29-05-1967 | NONE | | |
| GB 2150311 | A | 26-06-1985 | NONE | | |

Form PCT/ISA/210 (patent family annex) (July 1992)

13